# EUROPÄISCHE PATENTSCHRIFT

(11) **EP 0 996 560 B1**
(45) Veröffentlichungstag und Bekanntmachung des Hinweises auf die Patenterteilung: **17.09.2003**
(21) Anmeldenummer: 98938698.2
(22) Anmeldetag: 22.07.1998
(51) Int. Cl.: B60T 13/00

(54) **HYDRAULISCHE FAHRZEUGBREMSE MIT FESTSTELLEINRICHTUNG**
HYDRAULIC VEHICLE BRAKE WITH BLOCKING MEANS
FREIN HYDRAULIQUE DOTE DE MOYENS D'IMMOBILISATION

(30) Priorität: 25.07.1997 DE 19732168
(43) Veröffentlichungstag der Anmeldung: 03.05.2000
(60) Teilanmeldung: 03004561.1
(73) Patentinhaber: LUCAS INDUSTRIES PUBLIC LIMITED COMPANY, Solihull B90 4LA (GB)
(72) Erfinder: POERTZGEN, Gregor, D-56068 Kolbenz (DE); WÖRSDORFER, Karl, Friedrich, D-55257 Budenheim (DE); ERBEN, Ralf, D-56132 Kemmenau (DE); ZENZEN, Guido, D-56290 Macken (DE)
(74) Vertreter: Beyer, Andreas, Dr.
(86) Internationale Anmeldenummer: EP9804582
(87) Internationale Veröffentlichungsnummer: WO99005011

(56) Entgegenhaltungen:
- DE-A- 19 526 645
- DE-A- 19 536 694
- DE-A- 19 536 695
- US-A- 4 804 073
- US-A- 5 107 967
- US-A- 5 139 315

## Beschreibung

Die Erfindung betrifft eine hydraulische Fahrzeugbremse gemäß dem Oberbegriff des Patentanspruchs 1, wie sie aus der US-A-4 804 073 bekannt ist.

Aus der EP 0 729 871 A1 ist eine hydraulische Fahrzeugbremse bekannt, bei der ein Reibbelag mittels eines Bremskolbens durch Hydraulikdruck gegen eine Bremsscheibe gepreßt werden kann, um deren Drehung abzubremsen. Hierzu wird in üblicher Weise Hydraulikfluid unter Druck in eine Hydraulikkammer eingeleitet, deren eine Begrenzungswand durch den Bremskolben gebildet ist. Der Druck in der Hydraulikkammer führt dann zur Verschiebung des Bremskolbens und damit des Reibbelags in Richtung auf die Bremsscheibe. Damit diese bekannte Fahrzeugbremse nicht nur als Betriebsbremse, sondern darüber hinaus als Feststellbremse - auch Parkbremse genannt - verwendet werden kann, weist sie eine Spindel/Mutter-Anordnung zum mechanischen Feststellen des Bremskolbens in einem Zustand auf, in dem der Reibbelag sich in Eingriff mit der Bremsscheibe befindet.

Der Erfindung liegt die Aufgabe zugrunde, eine hydraulische Fahrzeugbremse bereitzustellen, die sowohl als Betriebsbremse als auch als Feststellbremse benutzt werden kann und deren Konstruktion kompakter als diejenige der aus der EP 0 729 871 A1 bekannten Fahrzeugbremse ist. Darüber hinaus soll die bereitzustellende hydraulische Fahrzeugbremse kostengünstig an verschiedene Fahrzeugmodelle anpaßbar sein.

Diese Aufgabe ist erfindungsgemäß mit einer hydraulischen Fahrzeugbremse gelöst, die die im Patentanspruch 1 angegebenen Merkmale aufweist.

Demnach ist der die Spindel drehantreibende Elektromotor erfindungsgemäß derart angeordnet, daß seine mit Abstand parallel zur Mittellängsachse des Bremskolbens verlaufende Abtriebswelle auf der vom Bremskolben abgewandten Seite aus dem Elektromotor austritt. Diese Anordnung ist insbesondere hinsichtlich der Baulänge platzsparend. Das zwischen den Elektromotor und die Spindel geschaltete Untersetzungsgetriebe mit seiner Untersetzung in der Größenordnung von 200:1 ermöglicht den Einsatz eines kleinen, platzsparenden Elektromotors.

Der Elektromotor und das mit ihm gekoppelte Untersetzungsgetriebe sind als eigenständig handhabbare Unterbaugruppe ausgeführt, die standardisiert ist und sich mit verschiedenen Fahrzeugbremsen eines Bautyps kombinieren läßt. Dadurch steigen die Stückzahlen einer solchen Motor/Getriebe-Einheit, was sich günstig auf die Stückkosten auswirkt. Darüber hinaus ermöglicht die als eigenständige Baugruppe ausgeführte Motor/Getriebe-Einheit in einfacher Weise eine Befestigung am Gehäuse der Bremse in jeder beliebigen Winkellage, so daß räumlichen Einschränkungen am Einbauort der Bremse durch eine entsprechend andere Positionierung der Unterbaugruppe problemlos Rechnung getragen werden kann.

Das Untersetzungsgetriebe ist vorteilhaft als Planetenradgetriebe, als Harmonic-Drive-Getriebe, als Exzenterscheibengetriebe oder als Taumelscheibengetriebe ausgeführt, da diese Getriebetypen kompakt sind und bei geringem Gewicht einen guten Wirkungsgrad haben. Das Untersetzungsgetriebe kann einstufig oder auch mehrstufig, insbesondere zweistufig ausgebildet sein. Besonders vorteilhaft zur Einsparung von Bauraum ist ein zweistufiges Getriebe, dessen eine Stufe von einem der zuvor genannten Getriebetypen mit einer Untersetzung im Bereich von 50:1 gebildet wird, der dann eine zweite Stufe mit einer Untersetzung im Bereich von 4:1 vor- oder nachgeschaltet ist, so daß die Gesamtuntersetzung im Bereich von 200:1 erzielt wird. Bei einem mehrstufigen Untersetzungsgetriebe, insbesondere bei einem zweistufigen Untersetzungsgetriebe, ist bevorzugt die Stufe mit der niedrigeren Untersetzung als einfaches Stirnradgetriebe oder mit besonderem Vorteil als Riemengetriebe, insbesondere als Zahnriemengetriebe ausgeführt. Die Verwendung eines Riemen- oder Zahnriemengetriebes führt zu einer besonders guten Geräuschentkopplung zwischen dem antreibenden Elektromotor und den übrigen Teilen der Fahrzeugbremse und damit zu einem komfortablen, leisen Betrieb.

Bei allen Ausführungsformen der erfindungsgemäßen Fahrzeugbremse ist die Spindel/Mutter-Anordnung mit Vorteil selbsthemmend ausgeführt, üblicherweise durch geeignete Wahl der Steigung eines die Mutter mit der Spindel verbindenden Gewindes. Eine selbsthemmende Spindel/Mutter-Anordnung gestattet es, auf eine Arretierung zu verzichten, nachdem die Fahrzeugbremse durch Drehen der Spindel festgestellt worden ist.

Vorzugsweise ist die Spindel/Mutter-Anordnung in der Hydraulikkammer angeordnet. Dies führt zu einer noch kompakteren Bauweise und sichert darüber hinaus die Schmierung der Spindel/Mutter-Anordnung. Gemäß einer Weiterbildung dieser Ausführungsform ist der Bremskolben als einseitig offener Hohlkolben ausgebildet, so daß die Spindel/Mutter-Anordnung in platzsparender Weise zumindest zum Teil in dem Bremskolben aufgenommen ist.

Bei bevorzugten Ausgestaltungen der erfindungsgemäßen Fahrzeugbremse wird die durch die Rotation der Spindel hervorgerufene Translationsbewegung der Mutter mittels eines Sensors erfaßt. Auf diese Weise läßt sich ein vorgegebener, kleiner Abstand zwischen dem Bremskolben und der Mutter und damit eine optimale Funktion der Feststellbremse bzw. der Notbremse sicherstellen. In der Praxis wird bei unbetätigter Feststell- bzw. Notbremse ein Abstand zwischen der Mutter und dem Bremskolben von ungefähr 0,5 mm angestrebt. Ein stets gleicher Abstand zwischen der Mutter und dem Bremskolben ermöglicht es zum einen, in kurzer Zeit, d.h. im Bereich von etwa 1 Sekunde, die gewünschte, maximale Zuspannkraft der Feststellbremse zu erzielen, und gestattet es zum anderen, daß der Bremskolben sich nach einer Betätigung gemäß dem sogenannten "Rollback"-Prinzip wieder zurückbewegt und nicht vorzeitig an der Mutter zur Anlage kommt, woraus ein Restschleifmoment zwischen dem Reibglied und dem abzubremsenden Rotor entstehen könnte. Unter dem "Rollback"-Prinzip verstehen Fachleute das Zurückstellen des Bremskolbens im Anschluß an einen Bremsvorgang, das durch die Rückstellkraft der beim Bremsvorgang elastisch verformten, den Bremskolben abdichtenden Elastomerdichtung hervorgerufen wird. Der genannte Sensor zur Erfassung der Translationsbewegung der Mutter kann beispielsweise ein Sensor sein, der direkt den von der Mutter zurückgelegten Weg erfaßt. Hierzu eignen sich ohmsche Sensoren, induktive Sensoren oder auch kapazitive Sensoren. Um die Steuerung der Bremse zu verbessern, kann zusätzlich zu einem den Weg der Mutter erfassenden Sensor auch ein die Zuspannkraft erfassender Kraftsensor vorgesehen sein, der beispielsweise im oder am Reibglied oder auch im Bremskolben angeordnet sein kann.

Alternativ kann der die Translationsbewegung der Mutter erfassende Sensor ein Sensor sein, der die Umdrehungen der Abtriebswelle des die Spindel drehantreibenden Elektromotors mißt. Statt die Umdrehungen der Abtriebswelle des Elektromotors selbst zu messen, können auch die Umdrehungen eines Zahnrades im nachgeschalteten Untersetzungsgetriebe gemessen werden. Zur Messung der Umdrehungen eignet sich insbesondere ein Hallsensor, der ein rechteckförmiges Ausgangssignal bereitstellt. Wird ein solcher Hallsensor beispielsweise auf die Zähne eines mit der Abtriebswelle des Elektromotors gekoppelten Zahnrades ausgerichtet, so entspricht eine Umdrehung der Abtriebswelle einer bestimmten Anzahl von Rechteckimpulsen, nämlich der Anzahl der Zähne des Zahnrades. Durch die so erzielte, hohe Auflösung der Drehbewegung der Abtriebswelle des Elektromotors läßt sich die Translationsbewegung der Mutter, die durch die Drehung der Spindel hervorgerufen wird, mit einer sehr hohen Genauigkeit erfassen, denn zwischen den Umdrehungen des Elektromotors einerseits und der Translationsbewegung der Mutter andererseits besteht ein fester, durch die vorhandene Untersetzung gegebener Zusammenhang. Überdies läßt sich ein Hallsensor sehr gut in die bereits genannte Einheit aus Elektromotor und Untersetzungsgetriebe integrieren, so daß lange und damit potentiell störanfälligere elektrische Verbindungen zwischen dem Hallsensor und dem Elektromotor vermieden sind. Ein die Funktionsabläufe der erfindungsgemäßen Fahrzeugbremse kontrollierendes Steuergerät ist mit Vorteil ebenfalls in der Motor/Getriebe-Einheit angeordnet.

Da aus dem zeitlichen Verlauf der Stromaufnahme des Elektromotors auf die Zuspannkraft der Bremse zurückgeschlossen werden kann, sind bei Vorhandensein eines Hallsensors oder eines anderen die Umdrehungen der Abtriebswelle des Elektromotors direkt oder indirekt messenden Sensors der weiter oben erwähnte Wegsensor und auch der Kraftsensor nicht mehr erforderlich. Das bedeutet, daß im Gehäuse der Fahrzeugbremse selbst keine Sensoren mehr installiert sein müssen, so daß keine elektrischen Verbindungen zwischen der eigentlichen Fahrzeugbremse und der Einheit aus Elektromotor und Untersetzungsgetriebe mehr notwendig sind. Zwischen der Motor/Getriebe-Einheit und der eigentlichen Fahrzeugbremse besteht also lediglich die mechanische Verbindung zwischen der Spindel und dem Untersetzungsgetriebe.

Die erfindungsgemäße Fahrzeugbremse hat den weiteren Vorteil, daß die mit dem Bremskolben zusammenwirkende Spindel/Mutter-Anordnung nicht nur als Feststelleinrichtung dienen kann, sondern daß die Spindel/Mutter-Anordnung darüber hinaus eine mechanische Notbetätigung darstellt, mittels derer das Reibglied gegen den sich drehenden Rotor der Bremse gepreßt werden kann, beispielsweise im Falle eines Versagens der hydraulischen Betätigung. Die erfindungsgemäße Fahrzeugbremse kann als Scheibenbremse oder auch als Trommelbremse ausgestaltet sein.

Ein Ausführungsbeispiel der erfindungsgemäßen Fahrzeugbremse wird im folgenden anhand der beigefügten, schematischen Figuren zusammen mit einem Verfahren zum Betreiben der Fahrzeugbremse näher erläutert. Es zeigt:
- Fig. 1: die teilweise aufgebrochene Draufsicht auf eine erfindungsgemäße hydraulische Fahrzeugbremse mit Feststell- und Notbremsfunktion, und
- Fig. 2A-2C: Diagramme, anhand derer ein Verfahren zum Betreiben der In Fig. 1 gezeigten Fahrzeugbremse als Feststellbremse beschrieben wird.

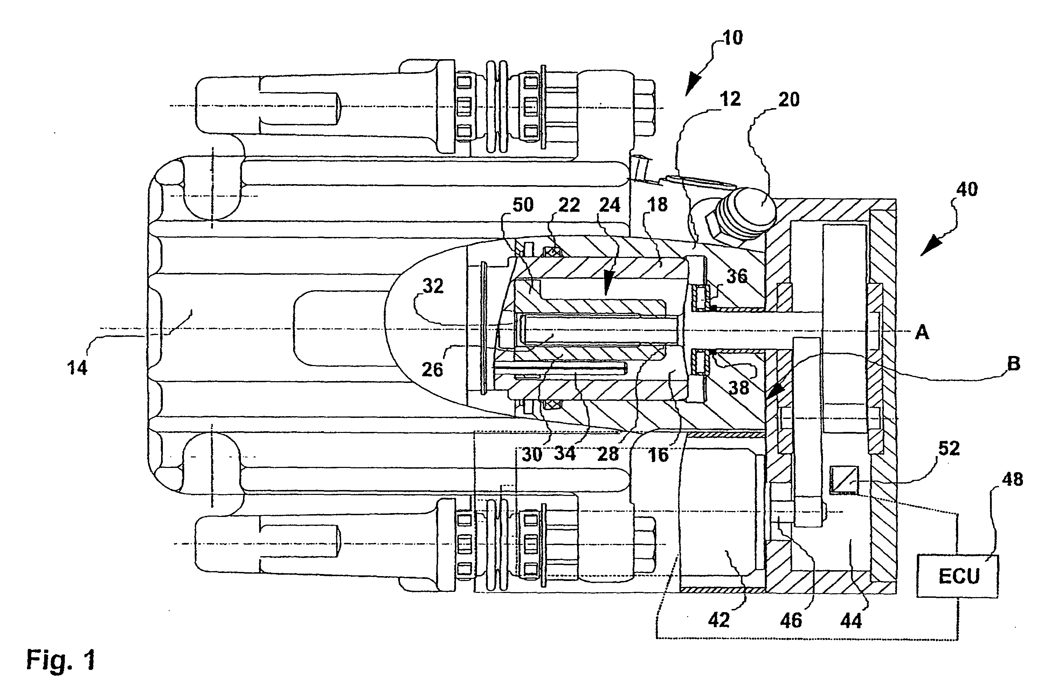

Die in Fig. 1 wiedergegebene und allgemein mit 10 bezeichnete Fahrzeugbremse ist hier als Schwimmsattel-Scheibenbremse ausgeführt, die in bekannter Weise ein Gehäuse 12 aufweist, an dem ein Schwimmsattel 14 einstückig ausgebildet ist, der eine hier nicht dargestellte Bremsscheibe übergreift.

In dem Gehäuse 12 befindet sich eine Hydraulikkammer 16, in der ein Bremskolben 18 abdichtend und entlang seiner Mittellängsachse A verschieblich aufgenommen ist. Zur Versorgung der Hydraulikkammer 16 mit Hydraulikfluid ist außen an der Fahrzeugbremse 10 ein Anschluß 20 vorhanden, der mit einer hier nicht dargestellten Bremsdruckgebereinheit, beispielsweise einer über ein Bremspedal betätigbaren Bremskraftverstärker/Hauptzylinder-Einheit, in Verbindung steht. Bei einer Betätigung der Bremsdruckgebereinheit wird das Hydraulikfluid in der Hydraulikkammer 16 unter Druck gesetzt, so daß sich der Bremskolben 18 entlang der Achse A nach links verschiebt, um nicht dargestellte Reibbeläge mit der ebenfalls nicht dargestellten Bremsscheibe in Reibungseingriff zu bringen. Wird die Betätigung der Bremsdruckgebereinheit beendet, kann Hydraulikfluid aus der Hydraulikkammer 16 wleder zurück in Richtung der Bremsdruckgebereinheit strömen, so daß der Bremskolben 18 sich längs der Achse A zurückverschiebt, um die Reibbeläge außer Eingriff mit der Bremsscheibe zu bringen. Ein mit 22 bezeichnetes, radial umlaufendes Dichtelement, das den Bremskolben 18 in der Hydraulikkammer 16 abdichtet, unterstützt die Rückstellung des Bremskolben 18, indem es nach dem "Rollback"-Prinzip eine elastische Rückstellkraft auf den Bremskolben 18 ausübt. Die soeben beschriebene, durch eine hydraulische Betätigung hervorgerufene Funktion der Scheibenbremse 10 sowie deren weiterer konstruktiver Aufbau ist Fachleuten auf diesem Gebiet wohlbekannt und braucht daher nicht näher erläutert zu werden.

Damit die gezeigte Fahrzeugbremse 10 nicht nur die zuvor erläuterte Funktion einer hydraulischen Betriebsbremse erfüllen kann, sondern auch als Park- oder Feststellbremse verwendet werden kann, ist eine allgemein mit 24 bezeichnete Spindel/Mutter-Anordnung vorhanden, die eine koaxial zur Achse A angeordnete Spindel 26 mit einem Außengewinde 28 und eine im wesentlichen hülsenförmige Mutter 30 aufweist, die mit einem zum Außengewinde 28 passenden Innengewinde 32 versehen ist.

Die Spindel/Mutter-Anordnung 24 dient dazu, eine Drehbewegung der Spindel 26 in eine Translationsbewegung der Mutter 30 umzusetzen, die hierzu mittels eines in sie eingreifenden, am Bremskolben 18 befestigten und aus diesem parallel zur Achse A hervorstehenden Führungsstift 34 an einer Drehung gehindert ist. Wie gut aus Fig. 1 zu erkennen ist, ist der Bremskolben 18 als rechtsseitig offener Hohlkolben ausgeführt und die Spindel/Mutter-Anordnung 24 befindet sich zum größten Teil innerhalb des hohlen Bremskolbens 18 und somit innerhalb der Hydraulikkammer 16. Die Spindel 26 ist im Gehäuse 12 abgestützt und mittels eines Lagers 36 drehbar gelagert. Eine Wellendichtung 38 dichtet die Spindel 26 im Gehäuse 12 ab, um die Dichtheit der Hydraulikkammer 16 zu gewährleisten.

Zum Drehantrieb der Spindel 26 dient eine allgemein mit 40 bezeichnete Einheit aus einem Elektromotor 42 und einem damit gekoppelten Untersetzungsgetriebe 44, welches seinerseits mit dem aus dem Gehäuse 12 herausstehenden Endabschnitt der Spindel 26 betrieblich gekoppelt ist. Das Untersetzungsgetriebe 44 hat eine Gesamtuntersetzung von 200:1, damit der Elektromotor 42 relativ klein gewählt werden kann und dennoch eine ausreichend große Zuspannkraft sichergestellt ist. Die Einheit 40 aus Elektromotor 42 und Untersetzungsgetriebe 44 ist eine separat handhabbare Unterbaugruppe, die nicht nur mit der gezeigten Scheibenbremse 10, sondern auch mit anderen Scheibenbremsen kombinierbar ist. Der Elektromotor 42 ist dabei so angeordnet, daß seine Abtriebswelle 46 sich parallel zur Achse A erstreckt und auf der vom Bremskolben 18 abgewandten Seite aus dem Gehäuse des Elektromotors 42 austritt. Diese Anordnung ist besonders platzsparend und ermöglicht es darüber hinaus, die Einheit 40 bezogen auf die Fläche B in jeder beliebigen Winkellage am Gehäuse 12 der Fahrzeugbremse 10 zu montieren. Eine Anpassung an vorgegebene Beschränkungen, die beispielsweise aus in der Nähe der Fahrzeugbremse 10 vorhandenen Fahrwerkskomponenten resultieren können, läßt sich somit auf einfache Weise vornehmen.

Es wird nun die Feststellbremsfunktion der gezeigten Fahrzeugbremse 10 beschrieben: Zum Feststellen wird zunächst der Elektromotor 42 von einem elektronischen Steuergerät 48 derart angesteuert, daß sich seine Abtriebswelle 46 in einer ersten Richtung dreht. Die Drehung der Abtriebswelle 46 wird über das Untersetzungsgetriebe 44 auf die Spindel 26 übertragen, die sich somit ebenfalls in einer ersten Richtung dreht, in der durch Herausschrauben der Mutter 30 eine Verlängerung der Spindel/Mutter-Anordnung 24 bewirkt wird. Die Mutter 30 wird also bezogen auf Fig. 1 längs der Achse A translatorisch nach links verschoben und gelangt mit ihrem ringförmigen Flansch 50 in Anlage mit dem Boden des Bremskolbens 18. Bei einer weiteren Drehung der Spindel 26 in der ersten Drehrichtung drückt dann die Mutter 30 den Bremskolben 18 nach links, wodurch letzterer den hier nicht dargestellten Reibbelag gegen die ebenfalls nicht dargestellte Bremsscheibe preßt. Ist dieser Zustand erreicht, kann der Elektromotor 42 abgestellt werden. Da die Gewinde-paarung der beiden Gewinde 28 und 32 selbsthemmend ist, bleibt die erreichte Stellung Spindel/Mutter-Anordnung 24 auch nach dem Abschalten des Elektromotors 42 erhalten.

Zum Lösen der Feststellbremse wird der Elektromotor 42 vom Steuergerät 48 so angesteuert, daß sich seine Abtriebswelle 46 in der entgegengesetzten Richtung dreht. Diese Drehung wird wiederum auf die Spindel 26 übertragen, so daß auch sie sich entgegengesetzt zur ersten Drehrichtung dreht und in die Mutter 30 hineinschraubt, wodurch die Mutter 30 längs der Achse A translatorisch nach rechts bewegt wird. Der Bremskolben 18 wird so druckentlastet und kann sich anschließend ebenfalls nach rechts zurückbewegen, so daß die Reibbeläge außer Eingriff mit der Bremsscheibe kommen.

Um ein Lösen der festgestellten Fahrzeugbremse 10 auch ohne die Motor/Getriebe-Einheit 40 ermöglichen, kann beispielsweise die Spindel 26 oder auch die Abtriebswelle 46 des Elektromotors 42 von außen zugänglich sein, so daß mittels einer aufsteckbaren Kurbel durch entsprechende Drehung die Mutter 30 nach rechts bewegt werden kann. Ein solches manuelles Rückstellen der Mutter 30 kann auch im Rahmen eines Wechsels der Reibbeläge erforderlich sein.

Damit eine optimale Funktion der Fahrzeugbremse 10 gewährleistet ist, darf im unbetätigten Zustand der Fahrzeugbremse 10 ein Abstand X zwischen der Mutter 30 und dem Boden des Bremskolbens 18 ein gewisses Maß nicht überschreiten. In der Praxis wird ein Abstand X von 0,5 mm als optimal angesehen. Das Einhalten dieses Abstandes X ist zum einen erforderlich, um in einer möglichst kurzen Zeit, d.h. in etwa 1 Sekunde, die gewünschte maximale Zuspannkraft der Feststellbremse zu erreichen. Zum anderen soll die Rückstellung des Bremskolbens nach einer hydraulischen Betriebsbremsung nicht dadurch behindert sein, daß der Bremskolben 18 vorzeitig an der Mutter 30 anstößt, da sonst ein Restschleifmoment zwischen der sich drehenden Bremsscheibe und den Reibbelägen entstehen könnte.

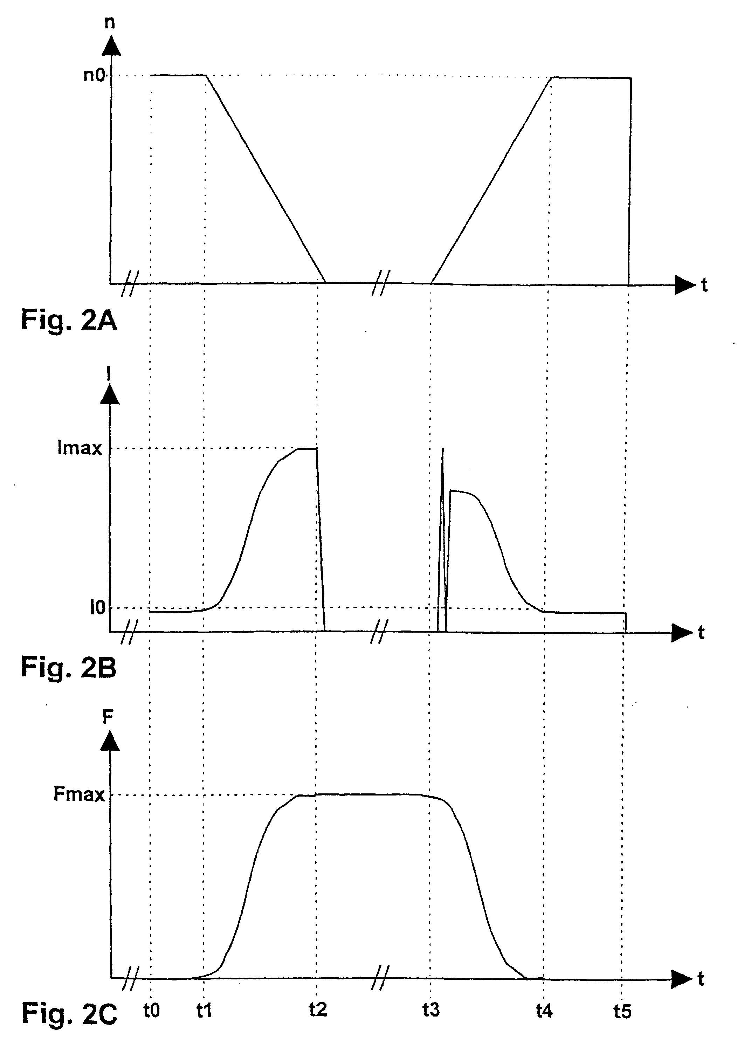

Unter Bezugnahme auf Fig. 2 wird im folgenden ein Verfahren zum Betreiben der Fahrzeugbremse 10 als Feststellbremse beschrieben, mit dem eine exakte Einstellung des Abstandes X gewährleistet ist.

In Fig. 2A ist die Drehzahl n der Abtriebswelle 46 des Elektromotor 42 über der Zeit dargestellt, in Fig. 2B die Stromaufnahme I des Elektromotors 42 über der Zeit, und in Fig. 2C ist die Zuspannkraft F der Fahrzeugbremse 10 über der Zeit aufgetragen, wobei der Zeitmaßstab in den Fig. 2A, 2B und 2C jeweils identisch ist.

Zum Feststellen der Fahrzeugbremse 10 mittels der Spindel/Mutter-Anordnung 24 muß zunächst die Mutter 30 durch eine Drehung der vom Elektromotor 42 angetriebenen Spindel 26 in Anlage an den Bremskolben 18 gebracht werden. Aus Fig. 2A bis 2C ist hierzu ersichtlich, daß vom Zeitpunkt t₀, also demjenigen Zeitpunkt, zu dem das Steuergerät 48 den Befehl erhält, die Fahrzeugbremse 10 mechanisch feststellen, bis zum Zeitpunkt t₁ der Elektromotor 42 mit einer nahezu konstanten, hohen Drehzahl und mit nahezu konstanter, niedriger Stromaufnahme betrieben wird, da noch keine Zuspannkraft aufzubringen ist.

Wenn zum Zeitpunkt t₁ die Mutter 30 am Boden des Bremskolbens 18 zur Anlage kommt, ist dies an einem Knick im Verlauf der Drehzahl n sowie der Stromaufnahme I feststellbar. Die vor dem Knick geltenden Werte für die Drehzahl und Stromaufnahme werden als Referenzwerte n₀ und I₀ in einem Speicher des Steuergerätes 48 abgelegt. Wie aus den Diagrammen ersichtlich, fällt ab dem Zeitpunkt t₁ die Drehzahl n des Elektromotors 42 rasch ab und korrespondierend hierzu steigt die Stromaufnahme I einhergehend mit der Zuspannkraft F deutlich an, bis zum Zeitpunkt t₂ die gewünschte Zuspannkraft Fₘₐₓ erreicht ist. Der Elektromotor 42 wird nun abgeschaltet und dementsprechend nehmen die Drehzahl n und der Strom I den Wert 0 an. Die Zuspannkraft verharrt aufgrund der selbsthemmenden Ausbildung der Spindel/Mutter-Anordnung 24 auf dem Wert Fₘₐₓ.

Erfolgt später, nämlich zum Zeitpunkt t₃, ein Lösen der Feststellbremse durch Einschalten des Elektromotors 42, so ist dies zunächst an einem Einschaltspitzenimpuls im Verlauf der Stromaufnahme I erkennbar, woraufhin letztere nahezu proportional zur Zuspannkraft F abnimmt, während sich gleichzeitig die Drehzahl n entsprechend erhöht. In dieser Phase werden die Drehzahl n und der Strom I mit den zuvor im Steuergerät abgelegten Referenzwerten n₀ und I₀ fortlaufend verglichen, bis zum Zeitpunkt t₄ die Drehzahl n und der Strom I mit den Referenzwerten n₀ bzw. I₀ übereinstimmen. Dies bedeutet, daß die Mutter 30 beginnt, nicht mehr am Boden des Bremskolben 18 anzuliegen, d.h. daß keine Zuspannkraft F mehr vorhanden ist. Deshalb stellt sich ab dem Zeitpunkt t₄ wieder ein nahezu konstanter, niedriger Strom I und eine nahezu konstante, hohe Drehzahl n ein, bis zum Zeitpunkt t₅ der gewünschte Abstand X zwischen der Mutter 30 und dem Boden des Bremskolbens 18 erreicht ist, woraufhin der Elektromotor 42 abgeschaltet wird.

Aufgrund der bekannten Untersetzungsverhältnisse zwischen der Abtriebswelle 46 des Elektromotors 42 und der Spindel 26 kann der gewünschte Abstand X einfach dadurch eingestellt werden, daß das Zeitintervall zwischen den Zeitpunkten t₄ und t₅ entsprechend gewählt wird. Im dargestellten Ausführungsbeispiel wird jedoch ein Hallsensor 52 eingesetzt, der die Umdrehungen pro Zeit der Abtriebswelle 46 des Elektromotors 42 mißt. Dieser Hallsensor 52 ist auf ein nicht gesondert dargestelltes Abtriebsritzel ausgerichtet, das mit dem freien Ende der Abtriebswelle 46 des Elektromotors 42 drehfest gekoppelt ist, und stellt pro Umdrehung dieses Abtriebsritzels eine Anzahl von Rechteckimpulsen bereit, die der Zähneanzahl des Abtriebsritzels entspricht und die vom Steuergerät 48 als Drehzählimpulse verarbeitet werden. Da der Zusammenhang zwischen der Rotationsbewegung der Abtriebswelle 46 und der Translationsbewegung der Mutter 30 bei einer gegebenen Untersetzung bekannt ist, kann durch Vorgabe einer bestimmten Anzahl von Drehzählimpulsen der gewünschte Abstand X sehr präzise eingestellt werden. Beginnend mit dem Zeitpunkt t₄ braucht hierzu nur die vorbestimmte Anzahl an Drehzählimpulsen in einem Zähler aufsummiert zu werden und bei Erreichen der vorbestimmten Anzahl wird der Elektromotor 42 abgeschaltet.

## Patentansprüche

1. Hydraulische Fahrzeugbremse (10), mit einem Gehäuse (12) und einem darin angeordneten Bremskolben (18), der auf ein Reibglied wirkt und mittels Hydraulikdruck, welcher in eine mit dem Bremskolben (18) zusammenwirkende Hydraulikkammer (16) einleitbar ist, in eine Betätigungsstellung verschiebbar ist, in der er das Reibglied gegen einen Rotor der Fahrzeugbremse preßt, und mit einer von einem Elektromotor (42) angetriebenen, zur Mittelachse (A) des Bremskolbens (18) koaxialen Spindel/Mutter-Anordnung (24) zum mechanischen Feststellen des Bremskolbens (18) in der Betätigungsstellung, deren Mutter (30) gegen eine Drehung gesichert ist und durch eine Rotation der Spindel (26) in Abhängigkeit der Drehrichtung translatorisch längs der Achse (A) entweder in Anlage an den Bremskolben (18) oder vom Bremskolben (18) weg bewegt wird, wobei zwischen den Elektromotor (42) und die Spindel (26) ein Untersetzungsgetriebe (44) mit einer Untersetzung in der Größenordnung von 200:1 geschaltet ist,
**dadurch gekennzeichnet, daß**
- der Elektromotor (42) seitlich neben dem Fahrzeugbremsengehäuse (12) angeordnet ist, derart, daß die Abtriebswelle (46) des Elektromotors (42) mit seitlichem Abstand parallel zur Achse (A) verläuft und auf der vom Bremskolben (18) abgewandten Seite aus dem Elektromotor (42) austritt,
- der Elektromotor (42) und das Untersetzungsgetriebe (44) als separat handhabbare Unterbaugruppe (40) ausgeführt sind, und
- die Unterbaugruppe (40) an dem Gehäuse (12) bezüglich einer Fläche (B) desselben in jeder beliebigen Winkellage montierbar ist.

2. Fahrzeugbremse nach Anspruch 1,
**dadurch gekennzeichnet, daß** die Spindel/Mutter-Anordnung (24) selbsthemmend ist.

3. Fahrzeugbremse nach Anspruch 1 oder 2,
**dadurch gekennzeichnet, daß** die Spindel/Mutter-Anordnung (24) in der Hydraulikkammer (16) angeordnet ist, insbesondere in einem als Hohlkolben ausgebildeten, einseitig offenen Bremskolben (18).

4. Fahrzeugbremse nach einem der Ansprüche 1 bis 3,
**dadurch gekennzeichnet, daß** das Untersetzungsgetriebe (44) ein Planetenrad-, ein Harmonic-Drive-, ein Exzenterscheiben- oder ein Taumelscheibengetriebe ist.

5. Fahrzeugbremse nach einem der vorhergehenden Ansprüche,
**dadurch gekennzeichnet, daß** das Untersetzungsgetriebe (44) mehrstufig, insbesondere zweistufig ist und daß eine Getriebestufe als Riemengetriebe, insbesondere als Zahnriemengetriebe ausgebildet ist.

6. Fahrzeugbremse nach einem der vorhergehenden Ansprüche,
**dadurch gekennzeichnet, daß** die Translationsbewegung der Mutter (30) mittels eines Sensors erfaßt wird.

7. Fahrzeugbremse nach Anspruch 6,
**dadurch gekennzeichnet, daß** der Sensor ein Hallsensor (52) ist, der die Umdrehungen der Abtriebswelle (46) eines die Spindel (26) drehantreibenden Elektromotors (42) mißt.

## Claims

1. A hydraulic vehicle brake (10) comprising a housing (12) and a brake piston (18) arranged therein, which acts upon a friction member and which, by means of hydraulic pressure that can be supplied into a hydraulic chamber (16) cooperating with the brake piston (18), can be moved into an actuating position in which it presses the friction member against a rotor of the vehicle brake, and having a spindle/nut arrangement (24) driven by an electric motor (42), which arrangement (24) is arranged coaxially with the centre axis (A) of the brake piston (18) for mechanically blocking the brake piston (18) in the actuating position, the nut (30) of said arrangement (24) is secured against rotation and, by rotation of the spindle (26), can either be moved into contact with the brake piston (18) or moved away from the brake piston (18) translatorily depending on the sense of rotation along axis (A), with a reduction gear (44) with a reduction in the order of 200:1 being connected between the electric motor (42) and the spindle (26),
**characterised in that**
- the electric motor (42) is arranged laterally adjacent the vehicle brake housing (12) in such a manner, that the output shaft (46) of the electric motor (42) extends at a lateral distance parallel to the axis (A) and exits from the electric motor (42) at the side facing away from the brake piston (18);
- the electric motor (42) and the reduction gear (44) are designed as a subassembly (40) adapted to be handled separately, and
- the subassembly (40) is adapted to be mounted at the housing (12) in any angular position with respect to a surface (B) of same.

2. The vehicle brake according to Claim 1,
**characterised in that** the spindle/nut arrangement (24) is self-locking.

3. The vehicle brake according to Claims 1 or 2,
**characterised in that** the spindle/nut arrangement (24) is arranged in the hydraulic chamber (16), in particular in a brake piston (18) designed as a hollow piston which is open at one side.

4. The vehicle brake according to one of Claims 1 to 3,
**characterised in that** the reduction gear (44) is a planetary gear, a harmonic drive gear, an eccentric disk gear, or a swash plate gear.

5. The vehicle brake according to one of the previous claims,
**characterised in that** the reduction gear (44) is designed to be multi-stage, in particular two-stage, and that one gear stage is designed as a belt gear, in particular as a toothed-belt gear.

6. The vehicle brake according to one of the previous claims,
**characterised in that** the translatory movement of the nut (30) is sensed by means of a sensor.

7. The vehicle brake according to Claim 6,
**characterised in that** the sensor is a Hall sensor (52) which measures the revolutions of the output shaft (46) of an electric motor (42) which rotationally drives the spindle (26).

## Revendications

1. Frein hydraulique de véhicule (10), comprenant un carter (12) dans lequel est disposé un piston de frein (18) agissant sur un élément de friction et pouvant être déplacé dans une position d'actionnement par une pression hydraulique qui peut être introduite dans une chambre hydraulique (16) coopérant avec le piston de frein (18), le piston de frein pressant dans cette position d'actionnement l'élément de friction contre un rotor du frein de véhicule, et comprenant un dispositif (24) à tige filetée et écrou disposé coaxialement avec l'axe médian (A) du piston de frein (18) et entraîné par un moteur électrique (42), ce dispositif servant à arrêter mécaniquement le piston de frein (18) dans la position d'actionnement, l'écrou (30) du dispositif étant bloqué en rotation et étant déplacé par une rotation de la tige filetée (26), en fonction du sens de rotation, en un mouvement de translation le long de l'axe (A) soit jusqu'au contact du piston de frein (18) soit en sens inverse, un démultiplicateur (44) dont le degré de démultiplication est de l'ordre de grandeur de 200:1 étant intercalé entre le moteur électrique (42) et la tige filetée (26),
**caractérisé en ce que**
- le moteur électrique (42) est placé latéralement à côté du carter (12) de frein de véhicule de telle manière que l'arbre moteur (46) du moteur électrique (42) s'étend, à une distance latérale, parallèlement à l'axe (A) et sort du moteur électrique (42) sur le côté opposé au piston de frein (18),
- le moteur électrique (42) et le démultiplicateur (44) sont réalisés sous forme de sous-groupe (40) apte à être manipulé séparément, et
- le sous-groupe (40) est apte à être monté sur le carter (12) dans une position angulaire quelconque par rapport à une surface (B) de celui-ci.

2. Frein de véhicule selon la revendication 1, **caractérisé en ce que** le dispositif (24) à tige filetée et écrou est autobloquant.

3. Frein de véhicule selon la revendication 1 ou 2, **caractérisé en ce que** le dispositif à tige filetée et écrou (24) est placé dans la chambre hydraulique (16), en particulier dans un piston de frein (18) ouvert d'un côté, réalisé sous forme de piston creux.

4. Frein de véhicule selon l'une des revendications 1 à 3, **caractérisé en ce que** le démultiplicateur (44) est un engrenage à roue planétaire, à démultiplicateur harmonique, à disque excentrique ou à plateau oscillant.

5. Frein de véhicule selon l'une des revendications précédentes,
**caractérisé en ce que** le démultiplicateur (44) est à plusieurs étages, en particulier à deux étages, et que l'un des étages de l'engrenage est une transmission à courroie, en particulier à courroie dentée.

6. Frein de véhicule selon l'une des revendications précédentes,
**caractérisé en ce que** le mouvement de translation de l'écrou (30) est capté par un détecteur.

7. Frein de véhicule selon la revendication 6, **caractérisé en ce que** le détecteur est une sonde de Hall (52) qui mesure le nombre de tours de l'arbre moteur (46) d'un moteur électrique (42) entraînant la tige filetée (26).
